# EUROPEAN PATENT APPLICATION

(11) **EP 0 603 957 A1**
(43) Date of publication of application: **29.06.1994**
(21) Application number: 93203558.7
(22) Date of filing: 17.12.1993
(51) Int. Cl.: B01D 25/176

(54) **Filter element for filter press and method for its production**

(30) Priority: 24.12.1992 IT BO920460
(71) Applicant: DIEMME S.P.A., I-48022 Lugo di Romagna(Ravenna) (IT)
(72) Inventor: Ballanti, Massimo, I-48100 Ravenna (IT)
(74) Representative: Corradini, Corrado

(57) **Abstract**

The invention relates to a filter element (5) for a filter press (1), comprising a central element (8) consisting of a substantially rectangular strip (9) of thermoplastic material wound in the form of a hollow cylinder and having two of its opposing edges (9') welded together; the axially opposing end portions (11) of the central element (8) are bent radially outwards from the central element (8) to each define, at least with one of its parts, a connection edge (12) having the shape substantially of a circular ring and lying on a substantially flat surface normal to the longitudinal axis of the central element (8), there forming part of the filter element (5) two annular elements (14) of thermoplastic material having substantially the shape of a circular ring and welded to respective connection edges (12), they being connected to respective sheets (7) of filtering material each having a circular hole (15) coaxial to the central element (8).

## Description

This invention relates to a filter element for a filter press, by which is meant that which is commonly known in the language of this sector as a "filter cloth".

Filter presses are operational units able to very effectively filter pressurized liquids to separate suspended solid particles from them, they using for this purpose filter elements consisting essentially of a central support element or collar substantially in the form of a spool constructed preferably of moulded plastics material, to the two cheeks of which two sheets of filtering fabric are respectively sewn or glued; the assembly defined by the two pieces of filtering material joined to the central collar constitutes the said "filter cloth". The liquid to be filtered is passed through the central hole in the collar to rise into an annular chamber formed between two consecutive perforated plates of the filter press, against the walls of which rest the said filtering fabrics, said liquid then passing through the fabrics and the perforated plates to leave, filtered, from one or more peripheral chambers.

The use of sewing to join the collar to the fabric sheets results in connections which are limited from the technical aspect in that they suffer from the drawback of allowing very fine solid material present in suspension in the liquid to be filtered to pass through the holes of the stitches. In addition, if the substances to be filtered are abrasive, the thread used for sewing can undergo wear to result in rupture of the filter element. Again, gluing the collar to the fabric sheets does not provide a sufficient assurance of permanent mutual adhesion because of the different structural characteristics of the materials joined together. In addition, said support elements of known type are structurally very rigid and for this reason are rather laborious to mount on the filter press, resulting in the inevitable formation of wrinkles in said sheets of filtering fabric deriving from the need to bend the filter cloths in order to mount and position them.

A further drawback of known collars is the fact that their construction in the form of a monolithic structure results in poor production versatility, in the sense that their construction (requiring moulds of corresponding dimensions) is difficult to adapt to variations in the size of the filter press.

The object of the present invention is therefore to obviate the aforesaid drawbacks by providing a filter element for a filter press, which is simple to mount, is easy to adapt at the production stage to the various press formats on which it is to be mounted, is economical to produce and is reliable with time.

The invention, as characterised in the claims, solves the problem of providing for a filter press a filter element of the type comprising a collar consisting of a substantially cylindrical hollow central element having its axial end portions connected coaxially to respective annular elements substantially in the shape of a circular ring; to each said annular element there being connectable a sheet of filtering material provided with a circular hole coaxial to said collar and having a diameter approximately equal to the inner diameter of said central element, characterised in that said central element consists of a substantially rectangular strip at least partly of thermoplastic material wound into the shape of a hollow cylinder and having two of its opposing edges welded together; the axially opposing end portions of the central element being bent radially outwards from the central element to each define, at least with one of its parts, a connection edge having the shape substantially of a circular ring and lying on a substantially flat surface normal to the longitudinal axis of said central element; each said annular element being constructed at least partly of thermoplastic material and being welded to a said connection edge.

The present invention also relates to a method for producing filter elements for filter presses.

The present invention provides a method for producing a filter element for a filter press, characterised by comprising the following steps: bending a substantially rectangular strip constructed at least partly of thermoplastic material into the form of a hollow cylinder; welding together two opposing edges of said strip to form a substantially cylindrical hollow central element; bending the axially opposing end portions of said central element radially outwards to define, by means of at least part of each of said end portions, a connection edge having substantially the shape of a circular ring and lying on a substantially flat surface normal to the longitudinal axis of said central element; welding coaxially to each said connection edge an annular element formed at least partly of thermoplastic material and having substantially the shape of a circular ring; and connecting to each said annular element a sheet of filtering material having a circular hole coaxial to said central element and of diameter approximately equal to the inner diameter of said central element.

The technical characteristics of the invention in accordance with said object are apparent from the contents of the ensuing claims, its advantages being apparent from the detailed description given hereinafter with reference to the accompanying drawings, which illustrate one embodiment thereof by way of non-limiting example, and in which:
Figure 1 is a schematic section through a filter press using a plurality of filter elements formed in accordance with the present invention;
Figure 2 is a perspective view of a filter element formed in accordance with the teachings of the present patent application and usable in the filter press of Figure 1;
Figure 3 is a perspective view of a portion of the filter element of Figure 2;
Figures 4 and 4a show a step in the production of the filter element portion of Figure 3;
Figure 5 is a perspective view of some portions of the filter element of Figure 2;
Figure 6 is a perspective view of all the components of the filter element of Figure 2, some already assembled and some undergoing assembly.

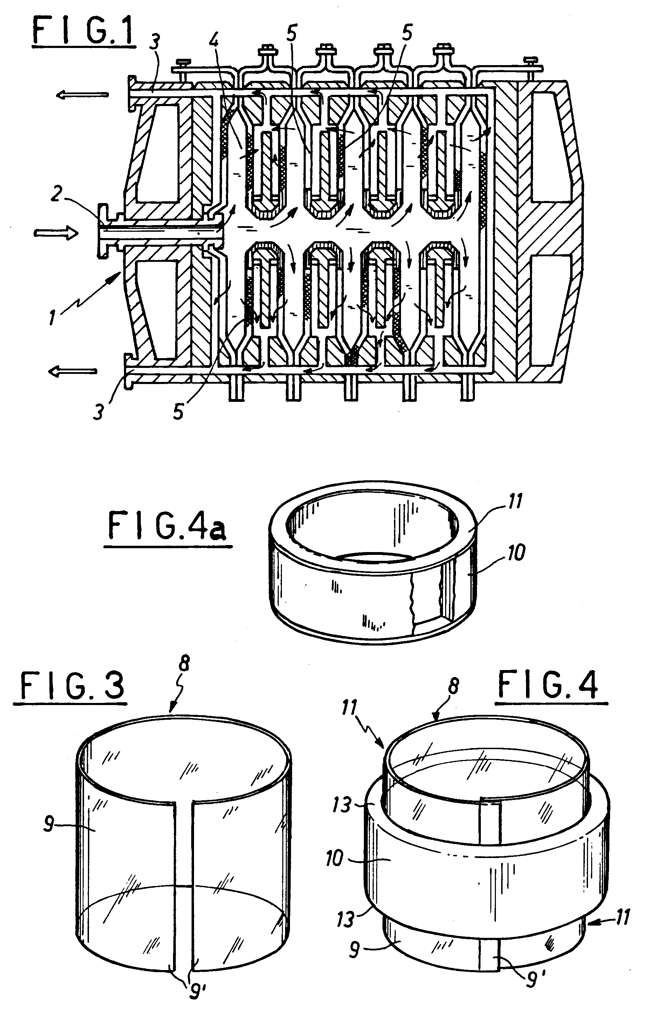

As shown in the accompanying Figure 1, the reference numeral 1 indicates overall a filter press comprising an entry duct 2 for a liquid substance to be filtered and two exit ducts 3 for the filtered liquid substance. Within the filter press 1 the duct 2 communicates with a chamber 4, which is connected to said ducts 3 via a plurality of filter elements 5.

As shown in Figure 2, each filter element 5 comprises a substantially spool-shaped support element 6, also known hereafter as the "collar", to which two sheets 7 of filtering fabric are joined in a manner described hereinafter. As shown in particular in Figure 3, the collar 6 comprises a central element 8 of substantially hollow cylindrical form, provided with a rectangular strip 9 formed at least partly of flexible thermoplastic material (such as PVC or polyurethane, formed by punching or cutting a sheet of the same material having a thickness considered the most suitable) which is wound into a ring with its two end edges 9' superposed and welded together (preferably by high frequency welding). The central element 8 is then inserted coaxially with slight clearance (Figure 4) into a hollow cylindrical electrode 10 associated with a high frequency welding machine, not shown as it is of a kind normally used for this type of joint, so that only its axially cental portion is contained within the electrode 10.

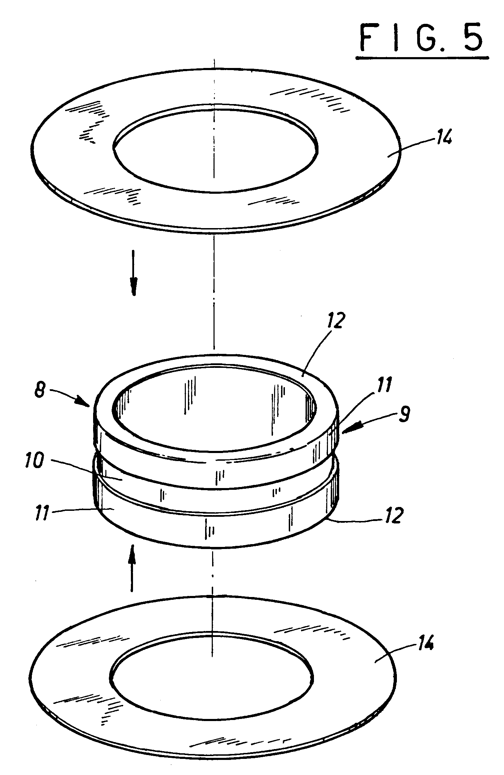

As shown in Figure 5, the two outer portions 11 of the central element 8, ie those projecting from the electrode 10, are then bent over towards the axially central outer region of the electrode 10 so that they surround respective outer regions of the electrode 10 to define respective connection edges 12 substantially in the form of a circular ring arranged respectively adjacent to the two end faces 13 of the electrode 10. According to a modification shown in Figure 4a, the two portions 11 of the central element 8 could be bent radially towards the periphery of the electrode 10 without partly covering the electrode 10, their length being such as to cover only the end faces 13 of the electrode 10.

In all cases, each of the portions 11 must be bent in such a manner as to define, with at least one of its parts, an edge 12 having substantially the shape of a circular ring and lying on a substantially flat surface normal to the longitudinal axis of the central element 8.

An annular element 14, also formed by simple punching or cutting from the said sheet and having substantially the form of a circular ring of inner diameter substantially equal to the inner diameter of the central element 8 is then brought coaxially into contact with each of the edges 12 (again see Figure 5) to form part of the collar 6. Each annular element 14, which is formed at least partly of thermoplastic material and can for example consist of fabric coated with PVC or polyurethane, is then welded, preferably by high frequency, to one end 12 of the central element 8.

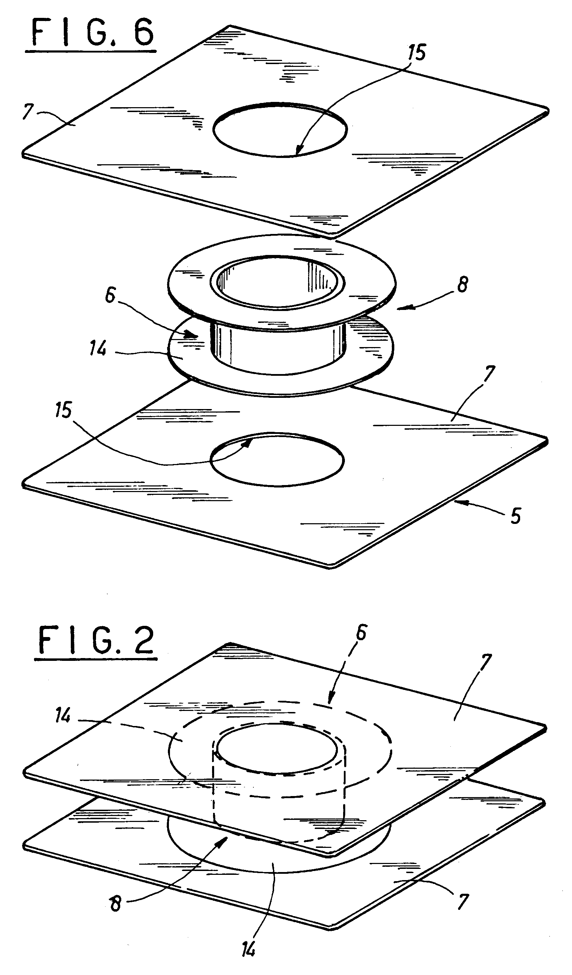

As shown in Figure 6, a sheet 7 of filtering fabric, which can for example be of PVC or polyamide resin, is then placed in contact with each of the annular elements 14. Each sheet 7 comprises a hole 15 of diameter substantially equal to the diameter of the central element 8 with the annular elements 14 already attached, and is positioned on the collar 6 (see Figure 2) such that the hole 15 embraces the central element 8 and in contact with one face of an annular element 14. At this point the sheets 7 are joined to the adjacent respective annular elements 14 by welding (preferably high frequency) or sewing, the filter element 5 hence being complete.

It should be noted that a thin layer of low-melting plastics material of a type compatible with the constituent materials of the annular elements 14 and sheets 7 can be interposed between the annular elements 14 and the sheets 7 to be joined together by welding.

It should also be noted that the materials chosen for forming the central element 8, the annular elements 14 and the sheets 7 must be perfectly compatible with each other if they are to be joined together by hot welding (in particular high frequency welding).

It should be finally noted that, with considerable advantages in terms of standardization, a given strip 9 used for producing a central element 8 can be used to form central elements 8 of different axial and diametrical dimensions, in that after it has been shaped and welded into cylindrical form as described, its axially end portions 11 can be bent over to a variable extent onto the electrode 10 before welding the annular elements 14 to the central element 8.

The invention conceived in this manner is susceptible to numerous modifications, all falling within the inventive concept. In addition, all details can be replaced by technically equivalent elements.

## Claims

1. For a filter press, a filter element of the type comprising a collar (6) consisting of a substantially cylindrical hollow central element (8) having its axial end portions (11) connected coaxially to respective annular elements (14) substantially in the shape of a circular ring; to each said annular element (14) there being connectable a sheet (7) of filtering material provided with a circular hole (15) coaxial to said collar (6) and having a diameter approximately equal to the inner diameter of said central element (8), characterised in that said central element (8) consists of a substantially rectangular strip (9) at least partly of thermoplastic material wound into the shape of a hollow cylinder and having two of its opposing edges (9') welded together; the axially opposing end portions (11) of the central element (8) being bent radially outwards from the central element (8) to each define, at least with one of its parts, a connection edge (12) having the shape substantially of a circular ring and lying on a substantially flat surface normal to the longitudinal axis of said central element (8); each said annular element (14) being constructed at least partly of thermoplastic material and being welded to a said connection edge (12).

2. A filter element for a filter press as claimed in claim 1, characterised in that each of said end portions of said central element (8) is also provided with a region bent such as to embrace an outer peripheral portion of the central element (8).

3. A filter element for a filter press as claimed in claim 1 or 2, characterised in that each said sheet (7) of filtering material is connected to said annular element (8) by welding.

4. A filter element for a filter press as claimed in claim 1 or 2, characterised in that each said sheet (7) of filtering material is connected to said annular element (8) by sewing.

5. A method for producing a filter element for a filter press, of the type formed in accordance with any one of claims 1 to 4, characterised by comprising the following steps:
- bending a substantially rectangular strip (9) constructed at least partly of thermoplastic material into the form of a hollow cylinder;
- welding together two opposing edges (9') of said strip (9) to form a substantially cylindrical hollow central element (8);
- bending the axially opposing end portions (11) of said central element (9) radially outwards to define, by means of at least part of each of said end portions (11), a connection edge (12) having substantially the shape of a circular ring and lying on a substantially flat surface normal to the longitudinal axis of said central element (8);
- welding coaxially to each said connection edge (12) an annular element (14) formed at least partly of thermoplastic material and having substantially the shape of a circular ring; and
- connecting to each said annular element (14) a sheet (7) of filtering material having a circular hole (15) coaxial to said central element (8) and of diameter approximately equal to the inner diameter of said central element (8).

6. A method as claimed in claim 5, characterised in that each said end portion (11) of said central element (8) is bent in such a manner as to also comprise a region circumferentially embracing an outer peripheral portion of the central element (8).

7. A method as claimed in claim 5 or 6, characterised in that each said sheet (7) of filtering material is joined to a said annular element (14) by welding.

8. A method as claimed in claim 5 or 6, characterised in that each said sheet (7) of filtering material is joined to a said annular element (14) by sewing.

9. A filter element for a filter press as claimed in claims 1 to 4 and as described and illustrated with reference to the figures of the accompanying drawings and for the stated objects.

10. A method for producing a filter element for a filter press as claimed in claims 5 to 8 and as described and illustrated with reference to the figures of the accompanying drawings and for the stated objects.
